# EUROPÄISCHE PATENTANMELDUNG

(11) **EP 3 889 547 A1**
(43) Veröffentlichungstag der Anmeldung: **06.10.2021**
(21) Anmeldenummer: 20405017.3
(22) Anmeldetag: 02.04.2020
(51) Int. Cl.: G01D 4/00

(54) **MOBILE MULTIPUNKTMESSUNG OHNE VERKABELUNG DES ENERGIEVERBRAUCHS VERSCHIEDENER ANLAGEN UND DATENÜBERTRAGUNG MIT SIM-KARTE NACH EINEM ENERGY MANAGEMENT SYSTEM**

(71) Anmelder: Vasen, Norbert N., 6110 Wolhusen (CH)
(72) Erfinder: Vasen, Norbert N., 6110 Wolhusen (CH)

(57) **Zusammenfassung**

Ein mobiles Multipoint-Messsystem wurde entwickelt, um Verbraucher zu stimulieren eine Energiebuchhaltung einzuleiten, damit die Energiewende angeregt wird. Das System besteht aus getrennten Energiezählern oder anderen Sensoren (201) die mittels Funk mit einen Datenlogger (202) verbunden sind. Es kann sehr einfach an verschiedene Energieverbraucher eines Unternehmens angeschlossen werden. Die Verbrauchsdaten werden regelmässig im Datenlogger gesammelt und zum Energy Management System (203; EMS, meistens im Cloud) gesandt und können dort in Realzeit analysiert, überwacht und dargestellt werden (204), auch von ferne. Nach einer Woche kann man schon Energiesparmassnahmen finden, die sonst schwierig zu identifizieren wären.

Die Neuigkeit der Erfindung ist in die Einfachheit der mobilen und vorkonfigurierten Mess-Einheiten um die überzeugende Fähigkeiten des EMS im Bereich von neuen Verbrauchern zu bringen. Der Wert für die Gesellschaft ist die Einfachkeit für Energieverbraucher in das Energy Management (mit z.B. ISO 50'001) einzusteigen, indem sie für ausgewählten Energiefresser eine Verbrauchskurve und Analyse bekommen.

## Beschreibung

### Gegenstand und/oder technisches Gebiet

Die Erfindung betrifft eine Technologie und ein Verfahren um den Energieverbrauch und anderen Parameter von Anlagen mit wenig Aufwand und viel Detail aufzuzeichnen und einem zentralen Verarbeitungssoftware zu senden.

### Darlegung der Erfindung

### Stand der Technik

Sogar Grossverbraucher wissen oft nicht wo, wieviel und wenn Energie verbraucht wird. Sie kennen ihre Energieströme nach dem Hauptzähler nicht und deswegen kann keine Energiebuchhaltung gehalten werden. Ohne Energiebuchhaltung ist die Energiewende ernsthaft gehemmt, sowie die Ökonomie eines Unternehmens ohne Buchhaltung gehemmt ist. Die viele Verbraucher, die noch keine Energiebuchhaltung haben brauchen eine leichte Methode, womit sie schnell den Energieverbrauch der grössten Anlagen für eine Periode (z.B. eine Woche) in Realzeit aufzeichnen können um Energie-Ineffizienz aufzuspüren. Die vorgeschlagene Erfindung um mit wenig Aufwand trotzdem eine professionelle Messung zu machen kann nachher einfach in einer festen Energy Management System (EMS) umgesetzt werden, damit man nahtlos von der Einsteigerfase in die Fase der Energy Management (zB ISO 50'001) kann weitergehen. Heute wird hauptsächlich auf zwei Weisen gemessen.
1. Entweder hat man mobile Messgeräte, die Verbrauchsdaten in Realzeit aufzeichnen können.
2. Oder man hat ein Energy Management System (EMS) installiert, wenn es viele Anlagen zu bemessen gibt, und man die Übersicht nicht verlieren will.

### Nachteile Stand der Technik

Diese zwei Alternativen haben die folgende Nachteile:
1. Die mobile Messgeräte zeichnen zwar auf aber man kann die Daten nicht in Realzeit versammeln und verarbeiten. Sie sind dafür geeignet die Daten für einzelnen Anlagen aufzuzeichnen und nachher zu verarbeiten. Es ist ungeschickt um eine Messkampagne der wichtigsten Energiefresser eines Grossverbrauchers in Realzeit durchzuführen und so die günstigsten Energiesparmassnahmen aufzuspüren. Einige von diesen heutigen mobile Messgeräte können die Daten überfunken, jedoch meistens über nur einigen Metern, wenn keine Mauer dazwischen ist und dann jedenfals nur nach der Aufzeichnung und nicht in Realzeit.
2. Die fest installierte Versammlungssysteme für EMS sind teuer und gebrauchen feste Verkabelung. Ihrer Installation ist Massarbeit und braucht viel Konfigurierungsaufwand. Es braucht zu viel Aufwand um damit mehrere Verbraucher für kurze Zeit zu messen und so auf einfacher Weise in die Energiebuchhaltung einzusteigen.

### Aufgabe

Aufgabe der vorliegenden Erfindung ist es, die Vorteile der beiden Alternativen zu vereinigen in einem System und Ansatz, womit man mit wenig Aufwand eine kurze Messkampagne kann durchführen und trotzdem die kräftige Funktionen eines EMS benutzen kann.

### Lösung

Die Aufgabe wird durch die Merkmale des Patentanspruchs 1 gelöst. Die Erfindung erlaubt es einen tragbaren und vorkonfigurierten Mess-Set zum Grossverbraucher mitzunehmen und schnell auf 2 bis 10 Verbraucher zu installieren damit der Verbrauch aufgezeichnet und in Realzeit im EMS (meistens im Cloud) dargestellt und interpretiert werden kann.

### Vorteile

Vorteilhafte Weiterbildungen ergeben sich aus den abhängigen Patentansprüchen. Der Vorteil der Erfindung besteht darin, dass der Grossverbraucher mit wenig Aufwand und Kosten eine sehr gute Diagnose bekommt und damit die günstigsten Energiesparmassnahmen kann finden. Wie ein Kardiologe viele Informationen in einem EKG findet, so kann man viele Tatsachen aus dem Verbrauchskurve von zum Beispiel eine Woche herausfinden. Viele Energieverschwendungen werden von Vernachlassungen, vergessenen Schaltern oder falschen Einstellungen verursacht. Diese Art Verschwendungen können mit geringen Investitionen beheben werden aber werden meistens nicht in Begehungen von Energieexperten gefunden. Man braucht hier die Kombination von parallel funktionierenden Aufzeichnungsgeräten in Realzeit und die kräftigen Funktionen (Künstlicher Intelligenz inbegriffen) des EMS. Weil diese Hardware vermietet werden kann, muss man sie nicht kaufen und man muss auch nicht für eine Woche einen Jahresvertrag mit dem EMS-Cloud machen, weil diese Dienstleistung schon mit dem vermieteten Mess-Set verbunden ist. Diese Erfindung ist deswegen mit einer Dienstleistung verbunden.

Ein wichtiger Vorteil ist, dass wenn ein Grossverbraucher von den Vorteilen der Messmethode überzeugt ist, den Messtechnologie nachher beschaffen (und einen Vertrag mit dem EMS-Anbieter abschliessen) kann und mit wenig Aufwand die Realzeitmessung einfach fortsetzt. Er kann dass mit Verkabelung zwischen den einzelnen Messgeräten machen oder mit dem in die Erfindung angewendeten Funktechnik, die im freiem Feld bis 5 km weit kommt. In einem Gebäude werden es einige hunderten Meter sein, genügend für die meisten Fabriken.

Bei dem Versandt der versammelten Daten vom zentralen Logger bis zum Server (wo meistens das EMS installiert ist), wird eine SIM-Module mit kräftiger Antenne verwendet. Hier hat man den Vorteil, dass man dem Grossverbraucher nicht bitten muss deren Internetverbindung zu verwenden: manchmal wird er das abweisen.

Die Gesellschaft und die Energiewende gewinnt hier auch bei. Es wird für die Grossverbraucher viel leichter sein um in die professionelle Energiemanagement (Zielvereinbarung, ISO 50'001) einzusteigen und mit der modernen Diagnose jedes Jahr neue und günstigen Energiesparzielen zu erreichen.

### Aufzählung der Figuren/Zeichnungen

Die folgende Zeichnungen werden dargestellt. Jede Seite beginnt mit einem neuen 100-Zahl.

### Seite 1:

101 Die oben beschriebene heutige Alternative 1 mit mobilen Messgeräten.
102 Die oben beschriebene heutige Alternative 2 mit verkabeltem Messinfrastruktur.

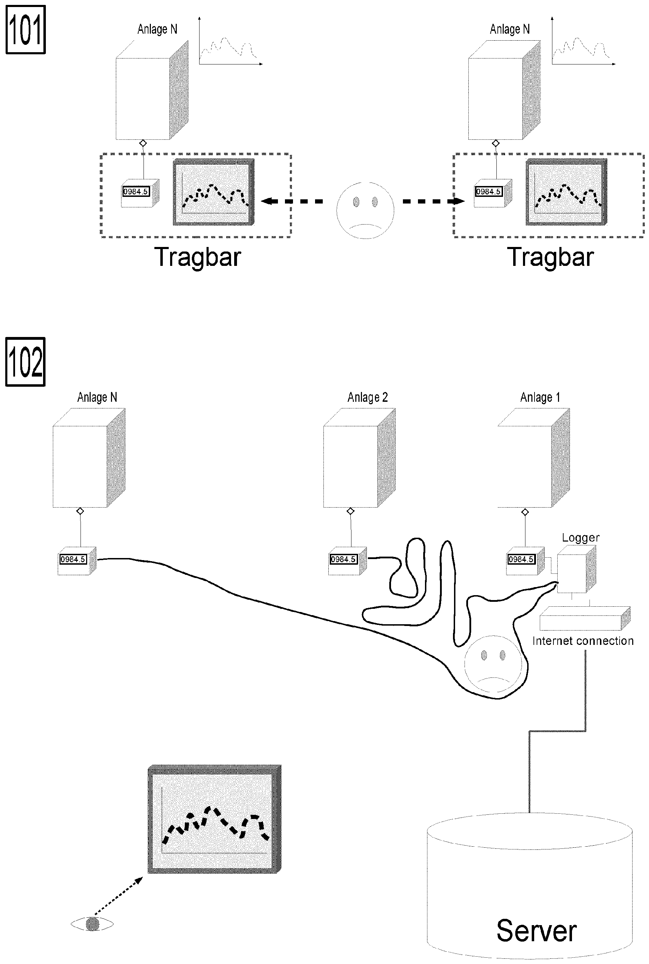

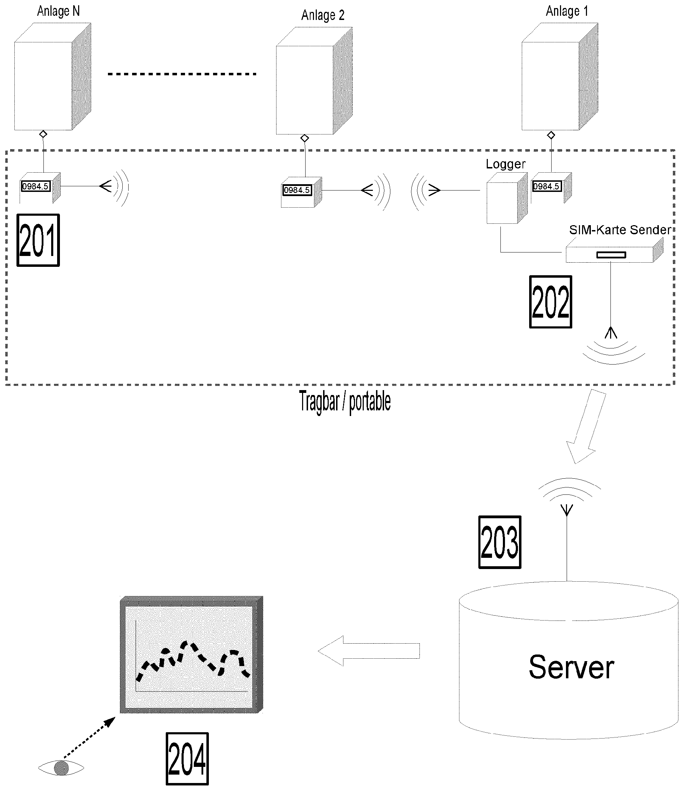

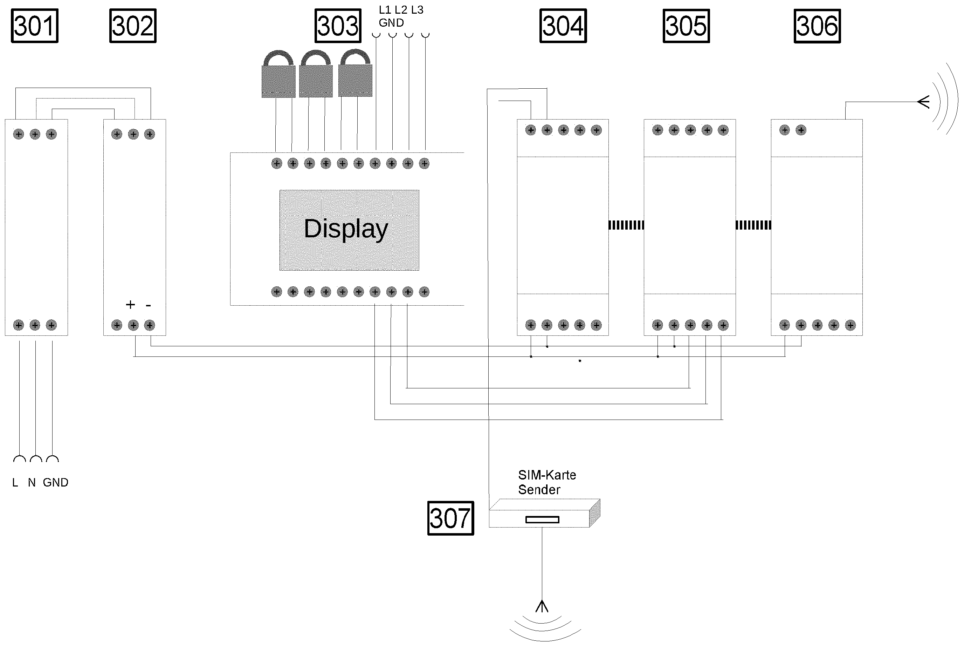

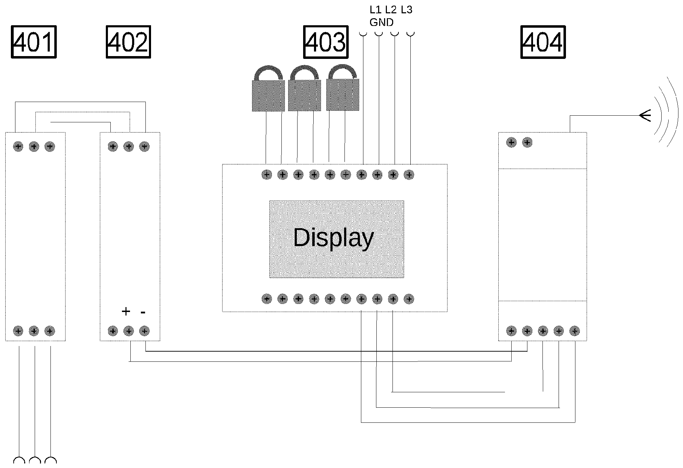

Seite 2 mit der erfunden Technologie und Ansatz. Diese Seite ist auch die Zeichnung für die Zusammenfassung.
201 Die einzelne vorkonfigurierte Messkästchen werden je auf die 3 Fasen einer Anlage angeschlossen (mit Kontakten für die Spanningsmessung und kontaktlosen Stromwandlern) und senden die Daten zum zentralen Datenlogger.
202 Der Datenlogger versammelt die Daten von allen Messkästchen und sendet es einmal pro Viertelstunde oder andere Zeiteinheit zum Server.
203 Die Daten kommen in das Energy Management System (EMS) und werden dort gespeichert, überwacht, verarbeitet und dargestellt, auch von ferne.
204 Im Webbrowser kann man das EMS bedienen.

Seite 3 mit dem zentralen Modul.
301 Hauptschalter mit Leitern für L, N und Erde.
302 Netzteil für die Erzeugung von 24 V Gleichspannung
303 3-Phasen-Zähler mit Kontaktlosen Stromsensoren und Spannungsanschlüssen. Statt eines Zählers kann man hier auch anderen Sensoren installieren, z.B. Raumfühler für Temperatur und Feichtigkeit, Stückzähler für Produkte, Vibrationsensoren oder andere Parameter, die für den Betrieb relevant sind.
304 Schnittstelle zwischen Datenlogger (305) und Mobilsender mit Simkarte. Hiermit werden die Daten zum Server des Energy Management Systems (EMS) gesandt.
305 Datenlogger, die durch einen Bus (in der Zeichnung mit 3 Leitern) mit dem Zähler oder anderen Sensor verbunden ist. Hier werden die Daten von allen Zählern/Sensoren gesammelt und gespeichert. Das Modul hat meistens viele anderen Funktionen, z.B. um örtlich die Daten zu lesen und darzustellen, oder Ausgänge um andere Geräte zu steuern.
306 Funkmodul, um Daten von anderen Mess-einheiten zu **empfangen.** Auf diese Weise kann diese Erfindung ohne Verkabelung Daten verschiedener Anlagen versammeln, auch wenn sie weit sind (bis 5 km im freien Feld). Diese Datenübertragung findet also innerhalb des Multipoint Messsystems statt.
307 Mobilsender mit Simkarte. Der Unterschied mit der anderen Antenne (306) ist das hier die Daten die Anlagen verlassen und ins Cloud gesandt werden.

Seite 4 mit dem dezentralen Modul.
401 Hauptschalter mit Leitern für L, N und Erde.
402 Netzteil für die Erzeugung von 24 V Gleichspannung
403 3-Phasen-Zähler mit Kontaktlosen Stromsensoren und Spannungsanschlüssen. Statt ein Zähler kann man hier auch anderen Messgeräte installieren, z.B. Raumfühler für Temperatur und Feichtigkeit, Stückzähler für Produkte oder andere Parameter, die für den Betrieb relevant sind.
304 Funkmodul, um Daten zum Datenlogger zu **senden.**

## Patentansprüche

1. Tragbare Mess-Einrichtung mit mehreren Mess-Einheiten, **dadurch gekennzeichnet, dass** die Messdaten der Einheiten zuerst versammelt und dann nach einem Verarbeitungszentrum gesandt werden.

2. Mess-Einrichtung nach Patentanspruch 1, **dadurch gekennzeichnet, dass** die einzelne Mess-Einheiten nicht unter einander und mit die Zentral-Einheit ("Datenlogger") verkabelt, sondern mit Funk die Daten über grösseren Abstand und in Realzeit versammeln.

3. Mess-Einrichtung nach Patentanspruch 1, **dadurch gekennzeichnet, dass** die Mess-Einheiten vorkonfiguriert sind und mit wenig Aufwand an den zu messenden Anlagen angeschlossen werden können, auch wenn die weit aus einander stehen.

4. Mess-Einrichtung nach Patentanspruch 1, **dadurch gekennzeichnet, dass** neben den energetischen Parameter auch anderen Parameter gemessen werden können.

5. Mess-Einrichtung nach Patentanspruch 1, **dadurch gekennzeichnet, dass** die zentrale Datenlogger nicht die örtliche Internet-Infrastruktur braucht, sondern die Daten selbstständig zum Verarbeitungszentrum ("Server") sendet.

6. Mess-Einrichtung nach Patentanspruch 1, **dadurch gekennzeichnet, dass** es einfach wird, die Fähigkeiten eines Energy Management System (EMS) mit mobilen Mitteln zu benutzen.

7. Verfahren zur Verwendung der Mess-Einrichtung gemäss einem der Ansprüche 1 bis 6, **dadurch gekennzeichnet, dass** Energieverbrauche und andere Parameter durch eine Software in Realzeit aufgezeichnet, analysiert und dargestellt werden.

8. Verfahren nach Patentanspruch 7, **dadurch gekennzeichnet, dass** die Mess-Einrichtung vermietet wird um Konfiguration- und Beschaffungskosten für Kunden zu vermeiden.
